# EUROPÄISCHE PATENTSCHRIFT

(11) **EP 1 538 053 B1**
(45) Veröffentlichungstag und Bekanntmachung des Hinweises auf die Patenterteilung: **30.05.2007**
(21) Anmeldenummer: 04028392.1
(22) Anmeldetag: 01.12.2004
(51) Int. Cl.: B60T 17/08, B61H 13/00, B60T 11/04

(54) **Bremseinrichtung eines Schienenfahrzeugs mit mehreren Federspeicherbremsen**
Brake installation of a rail road vehicle with multiple spring brakes
Installation de freinage d'un véhicule ferroviaire ayant plusieurs freins à accumulateur à ressort

(30) Priorität: 02.12.2003 DE 10356158
(43) Veröffentlichungstag der Anmeldung: 08.06.2005
(73) Patentinhaber: KNORR-BREMSE Systeme für Schienenfahrzeuge GmbH, 80809 München (DE)
(72) Erfinder: Elstorpff, Marc-Gregory, 80638 München (DE); Kerscher, Albert, 85386 Eching (DE); Nagy, Attila, 3535 Miskolc (HU)

(56) Entgegenhaltungen:
- EP-A- 0 166 156
- WO-A-02/12046
- US-A1- 2003 154 854

## Beschreibung

### Stand der Technik

Die Erfindung geht aus von einer Bremseinrichtung eines Schienenfahrzeugs mit mehreren Federspeicherbremsen, denen zum manuell-mechanischen Lösen jeweils eine durch eine Betätigungseinrichtung stellbare Notlöseeinrichtung zugeordnet ist, nach der Gattung des Patentanspruchs 1.

Federspeicherbremsen verfügen üblicherweise über eine Notlöseeinrichtung, um bei Ausfall der Betriebsenergie wie Druckluft, Öldruck oder elektrischer Strom die Federspeicherbremse manuell lösen zu können. Eine solche Federspeicherbremse mit Notlöseeinrichtung ist zum Beispiel aus der US 2003/0154854 A1 bekannt. Bei Schienenfahrzeugen sind in einem Drehgestell meist zwei, drei oder sogar vier Federspeicherbremsen eingebaut. Entsprechend viele Notlöseeinrichtungen müssen je Drehgestell betätigt werden, um eine energieloses Schienenfahrzeug ohne Schaden an den Bremsen oder an den Rädern bewegen zu können. Da je Notlöseeinrichtung ein Betätigungsmittel vorhanden ist, ist der Aufwand für die Installation hoch, beispielsweise sind bei vier Federspeichem je Drehgestell vier Betätigungsgriffe vorhanden. Wenn eine Betätigung der Notlöseeinrichtungen von beiden Fahrzeugseiten her möglich sein soll, dann sind sogar acht Betätigungsgriffe notwendig. Dies bedingt im Notfall außerdem einen hohen zeitlichen Aufwand zum Lösen der Federspeicherbremsen, da eine Vielzahl von Betätigungsgriffen betätigt werden muss. Deshalb kann es vorkommen, dass einzelne Federspeicherbremsen nicht gelöst werden, was Schäden an Bremsen verursacht und wegen der Reibung auch Brandgefahr bedingt.

Der Erfindung liegt demgegenüber die Aufgabe zugrunde, eine Bremseinrichtung der eingangs erwähnten Art derart weiter zu bilden, daß sie kostengünstiger zu fertigen ist und die Bedienung der Notlöseeinrichtungen vereinfacht wird.

### Vorteile der Erfindung

Der Erfindung liegt der Gedanke zugrunde, die Betätigungseinrichtung derart auszubilden, dass durch eine einzige Betätigung die Notlöseeinrichtungen der Federspeicherbremsen wenigstens eines Drehgestells des Schienenfahrzeugs gemeinsam stellbar sind. Hierdurch vereinfacht sich die Installation erheblich, da anstatt der Vielzahl von Betätigungseinrichtungen nur noch eine gemeinsame Betätigungseinrichtung für alle Notlöseeinrichtungen vorhanden ist. Weiterhin erfolgt das Notlösen der Federspeicherbremsen wesentlich schneller als bisher, da es nun mittels eines einzigen Betätigungsvorgangs bedienungsfreundlich durchgeführt werden kann. Schließlich wird durch die zwangsweise gemeinsame Betätigung der Notlöseeinrichtungen aller Federspeicherbremsen wirksam verhindert, dass einzelne Federspeicherbremsen versehentlich nicht gelöst werden und somit Schäden an den Bremsen entstehen.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung weist die Betätigungseinrichtung wenigstens ein manuell betätigbares Betätigungselement und Übertragungselemente zur Übertragung der manuellen Betätigungskraft von dem Betätigungselement zu den Notlöseeinrichtungen auf, wobei wenigstens einige der Übertragungselemente mit einem Verteiler zusammenwirken.

Um eine Betätigung von beiden Seiten des Schienenfahrzeugs, insbesondere von der besser zugänglichen her zu ermöglichen, kann auf jeder der beiden Schienenfahrzeugseiten je ein Betätigungselement angeordnet sein, wobei das Notlösen durch Betätigung des Betätigungselements auf der einen oder auf der anderen Fahrzeugseite möglich ist. Diese Lösung bringt einen hohen Bedienkomfort mit sich. Alternativ kann ein einziges Betätigungselement an einer zentralen Stelle des Schienenfahrzeugs angeordnet sein, beispielsweise an einem Fahrerstand. Dies erfordert gegenüber der obigen Lösung einen geringeren Installationsaufwand.

Gemäß einer Weiterbildung kann eine am Betätigungselement eingeleitete Betätigungskraft durch wenigstens einen Betätigungs-Bowdenzug auf den Verteiler übertragen werden. Ebenso kann wenigstens ein Übertragungs-Bowdenzug vorgesehen werden, welcher die Betätigungskraft vom Verteiler zu den Notlöseeinrichtungen weiterleitet. Solche Bowdenzüge sind kostengünstig und einfach zu installieren. Als Betätigungselement kommt vor allem ein Handgriff in Frage, der dann endseitig am Betätigungs-Bowdenzug angebracht ist und über den die Betätigungskraft als Zugkraft eingeleitet und über den Verteiler auf die Übertragungs-Bowdenzüge übertragen wird. Bei entsprechender Anordnung des Verteilers kann eine optimale Verlegung der Bowdenzüge erreicht werden. Weiterhin bildet der Verteiler eine Schnittstelle, an welcher defekte Federspeicherbremsen einfach getauscht werden können, da hierzu lediglich der entsprechende Übertragungs-Bowdenzug ausgehängt werden muss.

Vorzugsweise beinhaltet der Verteiler einen Hebel, an welchem die Übertragungs-Bowdenzüge und der wenigstens eine Betätigungs-Bowdenzug unter Ausbildung einer Hebelübersetzung festgelegt sind. Durch die Wahl der Hebelübersetzung kann dann die manuelle Betätigungskraft niedrig ausgelegt werden.

Gemäß einer weiteren, besonders zu bevorzugenden Maßnahme sind in einem am Schienenfahrzeug festgelegten Verteilergehäuse der Hebel endseitig angelenkt und Enden von Mänteln des Betätigungs-Bowdenzugs und der Übertragungs-Bowdenzüge dichtend aufgenommen. Das geschlossene Verteilergehäuse sorgt für eine hohe Betriebssicherheit unter allen Betriebsbedingungen, weil die Bowdenzug- und Hebelmechanik vor Schmutz und Feuchtigkeit geschützt ist.

### Zeichnungen

Ein Ausführungsbeispiel der Erfindung ist in der Zeichnung dargestellt und in der nachfolgenden Beschreibung näher erläutert. In den Zeichnungen zeigt
- Fig.1: eine stark schematische Darstellung eines Drehgestells eines Schienenfahrzeugs, welches mit einer bevorzugten Ausführungsform einer Bremseinrichtung mit Federspeicherbremsen gemäß der Erfindung ausgestattet ist, beinhaltend einen Verteiler.
- Fig.2: den Verteiler von Fig.1 in einer Stellung, in welcher die Federspeicherbremsen nicht notgelöst sind;
- Fig.3: den Verteiler von Fig.1 in einer Stellung, in welcher die Federspeicherbremsen notgelöst sind;

### Beschreibung eines Ausführungsbeispiels

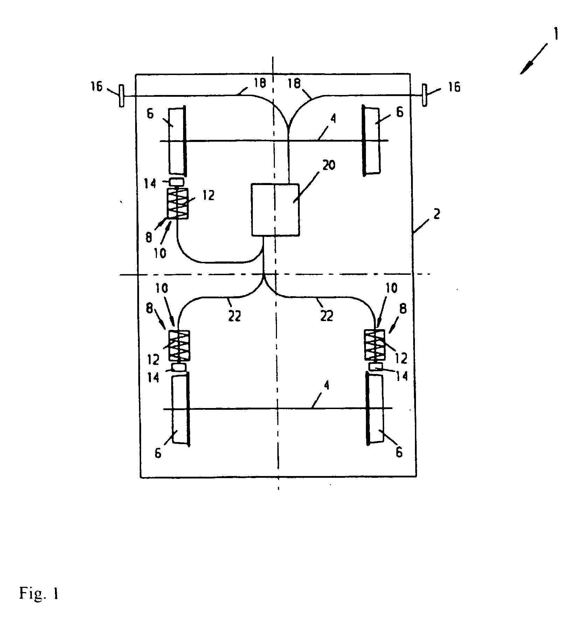

Von einer Bremseinrichtung 1 eines Schienenfahrzeugs sind in Fig.1 nur die für die Erfindung relevanten Baugruppen und Bauteile an einem Drehgestell 2 mit zwei Achsen 4 und vier Rädern 6 dargestellt. Zu diesen zählen drei Federspeicherbremsen 8, denen zum manuellen Lösen jeweils eine Notlöseeinrichtung 10 zugeordnet ist. Die Notlöseeinrichtungen 10 dienen dazu, bei Ausfall der Betriebsenergie wie Druckluft, Öldruck oder elektrischer Strom die Federspeicherbremsen 8 gegen die Wirkung der Speicherfedem 12 manuell lösen zu können. Da solche Notlöseeinrichtungen 10 hinlänglich bekannt sind, reicht es aus, sie im vorliegenden Fall lediglich stark vereinfacht darzustellen.

Mit Hilfe der Notlöseeinrichtungen 10 können Bremsbacken 14 der Federspeicherbremsen 8 gegen die Wirkung der Speicherfedem 12 außer Eingriff mit zugeordneten Bremsflächen der Räder 6 gebracht werden. Hierzu ist eine Betätigungseinrichtung vorgesehen, die derart ausgebildet ist, dass sie die Notlöseeinrichtungen 10 der Federspeicherbremsen 8 wenigstens des Drehgestells 2 des Schienenfahrzeugs gemeinsam stellt. Darüber hinaus können aber auch die Notlöseeinrichtungen 10 aller Federspeicherbremsen 8 des Schienenfahrzeugs gemeinsam betätigbar sein.

Die Betätigungseinrichtung umfasst wenigstens ein manuell betätigbares Betätigungselement, beispielsweise einen oder mehrere Handgriffe 16, und Übertragungselemente zur Übertragung der manuellen Betätigungskraft von dem Betätigungselement 16 zu den Notlöseeinrichtungen 10.

Bevorzugt ist je ein Handgriff 16 an einer Schienenfahrzeugseite angeordnet, welcher die Betätigungskraft als Zugkraft über jeweils einen Betätigungs-Bowdenzug 18 auf einen Verteiler 20 überträgt, welcher Bestandteil der Betätigungseinrichtung ist. Anstatt auf jeder Fahrzeugseite ein Betätigungselement 16 vorzusehen, kann auch ein einziges Betätigungselement an einer zentralen Stelle des Schienenfahrzeugs, insbesondere an einem Fahrerstand angeordnet sein. In diesem Fall ist lediglich ein einziger Betätigungs-Bowdenzug 18 zwischen dem Betätigungselement 16 und dem Verteiler 20 vorhanden.

Zwischen dem Verteiler 20 und den Notlöseeinrichtungen 10 der Federspeicherbremsen 8 sind weiterhin Übertragungselemente bevorzugt in Form von Übertragungs-Bowdenzügen 22 vorgesehen, welche die in den Verteiler 20 über die Betätigungs-Bowdenzüge 18 eingeleiteten Betätigungskräfte auf die einzelnen Notlöseeinrichtungen 10 übertragen. Entscheidend ist hierbei, dass durch Betätigung eines der beiden seitlichen Handgriffe 16 die Notlöseeinrichtungen 10 der Federspeicherbremsen 8 wenigstens des Drehgestells 2 des Schienenfahrzeugs gemeinsam betätigbar oder stellbar sind.

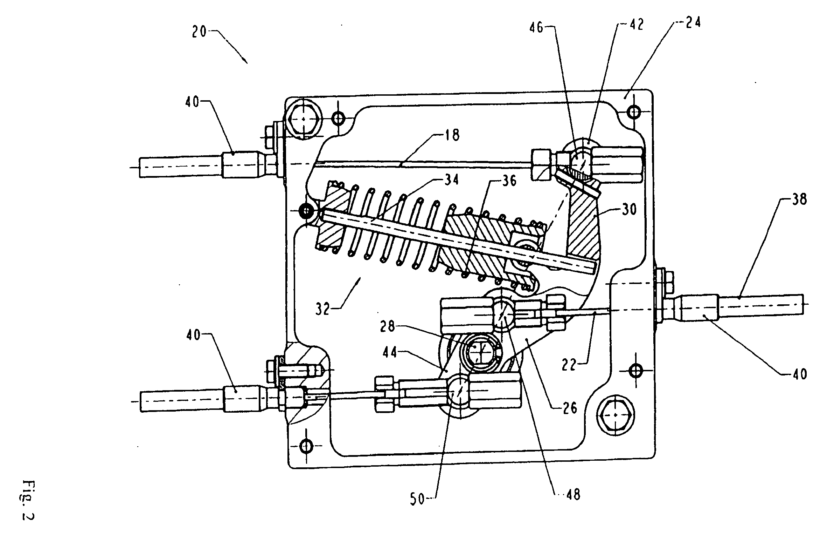

Wie insbesondere aus Fig.2 hervorgeht, beinhaltet der Verteiler 20 hierzu beispielsweise einen in einem am Schienenfahrzeug festgelegten Verteilergehäuse 24 angelenkten Hebel 26, an welchem die drei Übertragungs-Bowdenzüge 22 und die beiden Betätigungs-Bowdenzüge 18 angelenkt sind. Der Verteiler 20 hat dann die Aufgabe, die durch die beiden Betätigungs-Bowdenzüge 18 eingeleiteten Betätigungskräfte auf eine demgegenüber höhere Anzahl von Übertragungs-Bowdenzügen 22 zu verteilen bzw. sie an diese weiterzuleiten.

Der Hebel 26 hat in Bezug zu seiner Anlenk- bzw. Drehachse 28 im Verteilergehäuse 24 zwei Schenkel, wobei der eine Schenkel 30, an welchem die Betätigungs-Bowdenzüge 18 festgelegt sind, durch eine Rückstellfederanordnung 32, welche vorzugsweise eine eine Teleskop-Führung 34 umgebende Schraubenfeder 36 beinhaltet, gegen das Verteilergehäuse 24 abgestützt ist. Hierdurch wird der Hebel 26 gegen die Löserichtung vorgespannt, d.h. in eine Richtung, in welcher die Notlöseeinrichtungen 10 nicht betätigt sind. Die Enden der Mäntel 38 der Betätigungs-Bowdenzüge 18 und der Übertragungs-Bowdenzüge 22 sind in entsprechenden Aufnahmen 40 des Verteilergehäuses 24 wasser- und staubdicht aufgenommen.

Die Anlenkung 46 der beiden Betätigungs-Bowdenzüge 18 findet beispielsweise an den Seitenflächen des Endes 42 des einen Schenkels 30 des Hebels 26 abstandsgleich zu dessen Drehachse 28 statt. In der gleichen Weise sind auf demselben Schenkel 30, jedoch mit weit geringerem Abstand zur Drehachse 28 des Hebels 26 zwei der drei Übertragungs-Bowdenzüge 22 über Anlenkpunkte 48 angelenkt. Schließlich ist zwar mit etwa gleichem Abstand von der Drehachse 28, jedoch an dem anderen Schenkel 44 des Hebels 26 der dritte Übertragungs-Bowdenzug 22 an einem weiteren Anlenkpunkt 50 festgelegt.

Da die Entfernung der Anlenkpunkte 46 der Betätigungs-Bowdenzüge 18 von der Drehachse 28 des Hebels 26 größer ist als diejenige der Anlenkpunkte 48, 50 der Übertragungs-Bowdenzüge 22, ergibt sich eine Hebelübersetzung, durch welche die an den Betätigungs-Bowdenzügen 18 wirkenden und zum Stellen der Notlöseeinrichtungen 10 nötigen Betätigungskräfte relativ gering sind.

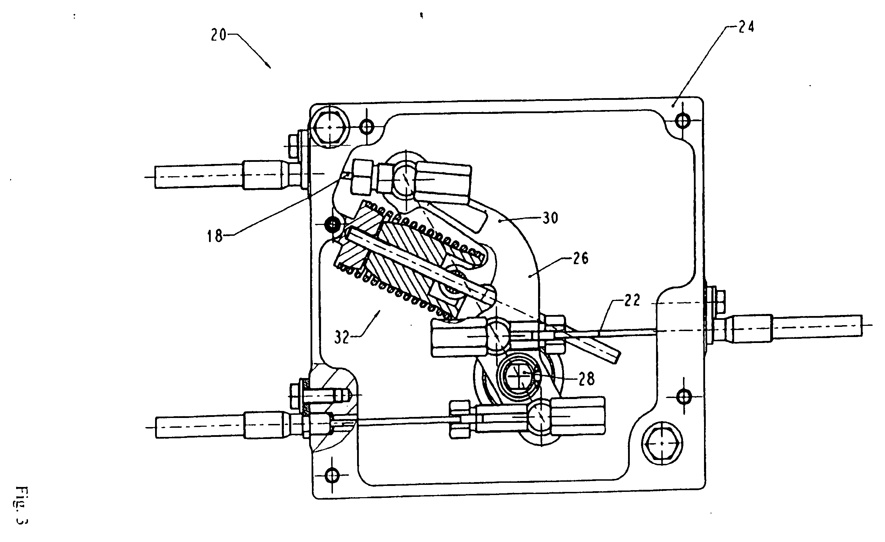

Wenn nun eine manuelle Zugkraft an einem oder beiden Handgriffen 16 angelegt wird, wie dies in Fig.3 veranschaulicht ist, so wird diese durch die Betätigungs-Bowdenzüge 18 auf den Hebel 26 im Verteiler 20 übertragen und mittels der Hebelübersetzung in eine demgegenüber größere Betätigungskraft an den Übertragungs-Bowdenzügen 22 gewandelt, welche die Notlöseeinrichtungen 10 betätigt und schließlich das Lösen der Federspeicherbremsen 8 bewirkt.

Gemäß einer Fortbildung der Erfindung kann die Rückstellfederanordnung 32 eine Über-Totpunkt-Kinematik aufweisen. Hierdurch kann im Sinne einer bistabilen Notlösebetätigung eine automatische Wiederbereitschaft der Notlösefunktion verhindert werden.

### Bezugszahlenliste

- 1: Bremseinrichtung
- 2: Drehgestell
- 4: Achsen
- 6: Räder
- 8: Federspeicherbremsen
- 10: Notlöseeinrichtung
- 12: Speicherfeder
- 14: Bremsbacken
- 16: Handgriff
- 18: Betätigungs-Bowdenzug
- 20: Verteiler
- 22: Übertragungs-Bowdenzug
- 24: Verteilergehäuse
- 26: Hebel
- 28: Drehachse
- 30: Schenkel
- 32: Rückstellfederanordnung
- 34: Teleskop-Führung
- 36: Schraubenfeder
- 38: Mäntel
- 40: Aufnahme
- 42: Ende
- 44: Schenkel
- 46: Anlenkpunkt
- 48: Anlenkpunkt
- 50: Anlenkpunkt

## Patentansprüche

1. Bremseinrichtung (1) für ein Schienenfahrzeug mit mehreren Federspeicherbremsen (8), denen zum manuell-mechanischen Lösen jeweils eine durch eine Betätigungseinrichtung (16, 18, 20, 22) stellbare Notlöseeinrichtung (10) zugeordnet ist, **dadurch gekennzeichnet, dass** die Betätigungseinrichtung (16, 18, 20, 22) derart ausgebildet ist, dass durch eine einzige Betätigung die Notlöseeinrichtungen (10) der Federspeicherbremsen (8) wenigstens eines Drehgestells (2) des Schienenfahrzeugs gemeinsam stellbar sind.

2. Bremseinrichtung nach Anspruch 1, **dadurch gekennzeichnet, dass** die Betätigungseinrichtung wenigstens ein manuell betätigbares Betätigungselement (16) und Übertragungselemente (18, 20, 22) zur Übertragung der manuellen Betätigungskraft von dem Betätigungselement (16) zu den Notlöseeinrichtungen (10) aufweist.

3. Bremseinrichtung nach Anspruch 2, **dadurch gekennzeichnet, dass** wenigstens einige der Übertragungselemente (18, 22) mit einem Verteiler (20) zusammenwirken.

4. Bremseinrichtung nach Anspruch 3, **dadurch gekennzeichnet, dass** je ein Betätigungselement (16) an einer Schienenfahrzeugseite angeordnet ist.

5. Bremseinrichtung nach Anspruch 3, **dadurch gekennzeichnet, dass** ein einziges Betätigungselement an einer zentralen Stelle des Schienenfahrzeugs, insbesondere an einem Fahrerstand angeordnet ist.

6. Bremseinrichtung nach wenigstens einem der Ansprüche 3 bis 5, **dadurch gekennzeichnet, dass** eine am Betätigungselement (16) eingeleitete Betätigungskraft durch wenigstens einen Betätigungs-Bowdenzug (18) auf den Verteiler (20) übertragbar ist.

7. Bremseinrichtung nach Anspruch 6, **dadurch gekennzeichnet, dass** die Übertragungselemente wenigstens einen Übertragungs-Bowdenzug (22) beinhalten, welcher die Betätigungskraft vom Verteiler (20) zu den Notlöseeinrichtungen (10) weiterleitet.

8. Bremseinrichtung nach Anspruch 7, **dadurch gekennzeichnet, dass** der Verteiler (20) einen Hebel (26) beinhaltet, an welchem die Übertragungs-Bowdenzüge (22) und der wenigstens eine Betätigungs-Bowdenzug (18) unter Ausbildung einer Hebelübersetzung festgelegt sind.

9. Bremseinrichtung nach Anspruch 8, **dadurch gekennzeichnet, dass** in einem am Schienenfahrzeug festgelegten Verteilergehäuse (24) der Hebel (26) angelenkt und Enden von Mänteln (38) des Betätigungs-Bowdenzugs (18) und der Übertragungs-Bowdenzüge (22) aufgenommen sind.

10. Bremseinrichtung nach Anspruch 9, **dadurch gekennzeichnet, dass** der Hebel (26) durch eine Rückstellfederanordnung (32) gegen die Löserichtung vorgespannt ist.

## Claims

1. Brake installation (1) for a rail-bound vehicle, including a plurality of spring-loaded brakes (8) which a respective emergency brake release means (10) adjustable by means of an actuator means (16, 18, 20, 22) is associated with for manual mechanical release, **characterised in that** said actuator means (16, 18, 20, 22) is configured in such a way that a single actuation of said emergency brake release means (10) permits the joint adjustment of said spring-loaded brakes (8) on at least one bogie (2) of the rail-bound vehicle.

2. Brake installation according to Claim 1, **characterised in that** said actuator means comprises at least one manually operable actuator element (16) and transmission elements (18, 20, 22) for transmitting the manual actuating force from said actuator element (16) to said emergency brake release means (10).

3. Brake installation according to Claim 2, **characterised in that** at least some of said transmission elements (18, 22) cooperate with a distributor (20).

4. Brake installation according to Claim 3, **characterised in that** one respective actuator element (16) is disposed on one side of the rail-bound vehicle.

5. Brake installation according to Claim 3, **characterised in that** a single actuator element is disposed on a central site of said rail-bound vehicle, in particular on a driver's cabin.

6. Brake installation according to at least one of the Claims 3 to 5, **characterised in that** an actuating force introduced on said actuating element (16) may be transmitted via at least one actuating Bowden control cable (18) to said distributor (20).

7. Brake installation according to Claim 6, **characterised in that** said transmission elements include at least one transmission Bowden control cable (22) that transmits the actuating force from said distributor (20) to said emergency brake release means (10).

8. Brake installation according to Claim 7, **characterised in that** said distributor (20) includes a lever (26) on which said transmission Bowden control cables (22) and said at least one actuating Bowden control cable (18) are fastened, forming a leverage system.

9. Brake installation according to Claim 8, **characterised in that** said lever (26) is articulated in a distributor housing (24) fastened on the rail-bound vehicle and that ends of envelopes (38) of said actuating Bowden control cable (18) and said transmission Bowden control cables (22) are received in said distributor housing (24).

10. Brake installation according to Claim 9, **characterised in that** said lever (26) is biased by a restoring-spring system (32) in opposition to the release direction.

## Revendications

1. Dispositif (1) de freinage d'un véhicule ferroviaire ayant plusieurs freins (8) à ressort accumulateur auxquels est affecté, pour le desserrage mécanique manuellement, respectivement un dispositif (10) de desserrage en cas d'urgence pouvant être réglé par un dispositif (16, 18) d'actionnement, **caractérisé en ce que** le dispositif (16, 18, 20, 22) d'actionnement est tel que, par un actionnement unique, les dispositifs (10) de desserrage en cas d'urgence des freins (8) à ressort accumulateur d'au moins un bogie (2) du véhicule ferroviaire peuvent être réglés en commun.

2. Dispositif de freinage suivant la revendication 1, **caractérisé en ce que** le dispositif d'actionnement a au moins un élément (16) d'actionnement pouvant être actionné manuellement et des éléments (18, 20, 22) de transmission de la force d'actionnement manuelle de l'élément (16) d'actionnement aux dispositifs (10) de desserrage en cas d'urgence.

3. Dispositif de freinage suivant la revendication 2, **caractérisé en ce que** certains des éléments (18, 22) de transmission coopèrent avec un répartiteur (20).

4. Dispositif de freinage suivant la revendication 3, **caractérisé en ce que** respectivement un élément (16) d'actionnement est monté d'un côté du véhicule ferroviaire.

5. Dispositif de freinage suivant la revendication 3, **caractérisé en ce qu'**un élément d'actionnement unique est monté en un point central du véhicule ferroviaire, notamment à l'endroit où se tient le conducteur.

6. Dispositif de freinage suivant l'une des revendications 3 à 5, **caractérisé en ce qu'**une force d'actionnement appliquée à l'élément (16) d'actionnement peut être transmise au répartiteur (20) par au moins un câble (18) Bowden d'actionnement.

7. Dispositif de freinage suivant la revendication 6, **caractérisé en ce que** les éléments de transmission comportent au moins un câble Bowden (22) de transmission qui transmet la force d'actionnement du répartiteur (20) aux dispositifs de desserrage en cas d'urgence.

8. Dispositif de freinage suivant la revendication 7, **caractérisé en ce que** le répartiteur (20) comporte un levier (26) sur lequel sont fixés les câbles Bowden (22) de transmission et le au moins un câble Bowden (18) d'actionnement avec formation d'un rapport de levier.

9. Dispositif de freinage suivant la revendication 8, **caractérisé en ce que** dans un carter (24) de répartiteur fixé au véhicule ferroviaire est articulé le levier (26) et sont reçues des extrémités de gaine (38) du câble Bowden (18) d'actionnement et des câbles Bowden (22) de transmission.

10. Dispositif de freinage suivant la revendication 9, **caractérisé en ce que** le levier (26) est mis sous tension préalable dans le sens contraire au sens de desserrage par un dispositif (32) à ressort de rappel.
